# EUROPEAN PATENT SPECIFICATION

(11) **EP 2 866 418 B1**
(45) Date of publication and mention of the grant of the patent: **27.02.2019**
(21) Application number: 13806830.9
(22) Date of filing: 07.06.2013
(51) Int. Cl.: H04L 29/08

(54) **METHOD AND SYSTEM FOR IMPLEMENTING SMART CARD REMOTE OPERATION BASED ON SMART CARD WEB SERVER**
VERFAHREN UND SYSTEM ZUR IMPLEMENTIERUNG DER FERNBEDIENUNG EINER CHIPKARTE AUF BASIS EINES CHIPKARTENWEBSERVERS
PROCÉDÉ ET SYSTÈME POUR METTRE EN OEUVRE UNE OPÉRATION À DISTANCE DE CARTE INTELLIGENTE SUR LA BASE D'UN SERVEUR INTERNET DE CARTE INTELLIGENTE

(30) Priority: 21.06.2012 CN 201210206494
(43) Date of publication of application: 29.04.2015
(73) Proprietor: Huizhou TCL Mobile Communication Co., Ltd., Huizhou, Guangdong 516006 (CN)
(72) Inventor: WU, Zhonghe, Huizhou Guangdong 516006 (CN); XIE, Tingting, Huizhou Guangdong 516006 (CN); TANG, Tao, Huizhou Guangdong 516006 (CN)
(74) Representative: Brachmann, Roland W.
(86) International application number: PCT/CN2013/076896
(87) International publication number: WO 2013/189244

(56) References cited:
- EP-A1- 2 388 968
- WO-A1-2010/117118
- CN-A- 101 588 650
- CN-A- 102 098 663
- CN-A- 102 098 663
- CN-A- 102 724 315
- CN-A- 102 752 375
- US-A1- 2007 239 857
- US-A1- 2009 191 917
- US-A1- 2010 211 784
- US-A1- 2011 047 257
- "SCWS Architecture ; OMA-AD-SCWS-V1_0_1-20050713-D", OMA-AD-SCWS-V1_0_1-20050713-D, OPEN MOBILE ALLIANCE (OMA), 4330 LA JOLLA VILLAGE DR., SUITE 110 SAN DIEGO, CA 92122 ; USA , no. .1 22 June 2005 (2005-06-22), pages 1-25, XP064022490, Retrieved from the Internet: URL:ftp/Public_documents/ARCH/ARC-SEC_SCT/ Permanent_documents/ [retrieved on 2005-07-13]

## Description

The present invention relates to remote operations and data updates of a smart card, and in particular to a method and system for implementing a smart card remote operation based on a smart card web server.

Currently, most Subscriber Identity Module (SIM) cards present mobile value-added services using the SIM card development toolkit menu, which is specifically implemented through the Over The Air (OTA) technology via the short message channel. The OTA technology is a technology based on the short message mechanism to realize the download, deletion and update of the service menu inside a SIM card through a mobile phone terminal and a remote server. This technology can provide data value-added services for users to obtain personalized information service. As limited by the short message channel, the data delivered in the past by the SIM card and the OTA server were substantially in the unit of byte, which could only contain a small quantity of text information, such as menus and access numbers, the data carrying capacity was low, and it was impossible to download relatively large application services. Along with the technological development, the SIM card capacity has increased from the K level to the M and G level, and card manufacturers can preinstall many applications using the large capacity cards and store a variety of files including multimedia files. As a result, how a remote server interacts with these large data files stored on a SIM card has become a problem currently in urgent need to be solved.

Smart Card Web Server (SCWS) is a server built in a smart card, which can display files stored in the smart card to a user in the webpage format as requested by the user. The SCWS technology enables mobile phone users to conveniently browse multimedia files of a smart card manufacturer in the form of webpages. However, current SCWS specifications do not describe how to implement information interaction between a remote management server and the SCWS in a smart card, and cannot perform remote control, remote data update, or configuration and customization of mobile phone contents.

The following prior art documents are described.

Document US2011047257 discloses a system and a method for installing a smart card applet based on applet installation information received through a HTTP communication channel between the smart card and a remote server.

Document EP2388968 discloses a method and system for downloading an application to a smart card. The system includes a smart card, a mobile terminal, an Over The Air (OTA) server and an outside-card entity management platform. The outside-card entity management platform establishes a connection with the smart card through the OTA server and mobile terminal, and downloads the application to the smart.

Document US2009191917 discloses a method between a chip card included in a mobile terminal and also provided with a server (SCWS), and one or a plurality of clients. The card communicates via one BIP channel with the terminal, and the terminal performs a gateway function.

As a result, the prior art still needs to be improved and developed.

The technical problem that the present invention intends to solve is to, in light of the above shortcomings of the prior art, provide a method and system for implementing a smart card remote operation based on the client mode of a smart card web server so as to effectively solve the addressing problem, realize reliable update of bulk data, and provide security identity authentication, implementation of data encryption and customizable access policies.

The present invention is defined according to the features of the independent claim(s). Further embodiments are defined in the depending claims.

The technical solution employed by the present invention to solve the technical problem is as follows:
A method for implementing a smart card remote operation based on a smart card web server, wherein it comprises the steps of:
A. A remote management server transmits a short message of the SIM type to a mobile phone for prompting the mobile phone to update the content of the smart card;
B. The mobile phone transmits the short message to the smart card, the smart card web server (SCWS) in the smart card instructs the mobile phone to establish a session channel for communications with the smart card and to establish a data channel for communications with the remote management server, construct a mobile phone gateway in the client mode, and connect the mobile phone gateway to the remote management server;
C. According to the instruction by the smart card, the mobile phone gateway requests data from the remote management server, and forwards the response data from the remote management server to the smart card for data update of the smart card.

In an embodiment, the method further comprises prior to Step A: when a mobile phone is activated, initializing the smart card and choosing an application to activate SCWS in the smart card.

In an embodiment, Step B further comprises:
B1. The smart card analyzes the short message transmitted by the mobile phone, which is processed by SCWS or its proxy program;
B2. SCWS or its proxy program chooses a SIM card channel and instructs the mobile phone to get ready for connection to the remote management server.

According to an embodiment, Step B further comprises:
B3. The mobile phone examines the execution environment, establishes a session channel with the smart card according to the Bearer Independent Protocol, establishes a HTTP or HTTPS channel that connects with the remote management server, and then constructs a mobile phone gateway of the client mode.

According to an embodiment, the smart card establishes a plurality of data channels with the remote management server via the mobile phone for synchronous update of the data.

In an embodiment, the session channel uses different session identifiers (SIDs) for identification, all connection access data are forwarded into the SID as indicated by a UICC, and the SID physically identifies a SIM card channel.

According to an embodiment, the smart card chooses HTTP/HTTPS for connection with the remote management server via the mobile phone gateway, and the format of the HTTP/HTTPS header is determined through prior negotiation with the remote management server.

A system for implementing a smart card remote operation based on a smart card web server, wherein the system comprises:
- An update notification module for transmitting a short message of the SIM type via the remote management server to a mobile phone and prompting the mobile phone to update the content of the smart card;
- A gateway establishing module for instructing the mobile phone via the smart card web server (SCWS) in the smart card to establish a session channel for communications with the smart card and a data channel for connection with the remote management server, construct a mobile phone gateway in the client mode, and connect to the remote management server;
- A data update module for requesting data from the remote management server via the mobile phone gateway according to the instruction by the smart card, and forwarding the response data from the remote management server to the smart card for data update of the smart card.

In an embodiment, the system further comprises a SCWS activation module for, when a mobile phone is activated, initializing the smart card and choosing an application to activate SCWS in the smart card.

In an embodiment, the gateway establishing module further comprises:
- A short message processing module for controlling the smart card to analyze the short message transmitted by the mobile phone, which is processed by SCWS or its proxy program;
- A connection instructing module for choosing a SIM card channel via SCWS or its proxy program and instructing the mobile phone to get ready for connection to the remote management server;
- A channel establishing module for examining the execution environment via the mobile phone, establishing a session channel with the smart card according to the Bearer Independent Protocol, and establishing a HTTP or HTTPS channel that connects with the remote management server.

In an embodiment, the channel establishing module is further used for the smart card to establish a plurality of data channels with the remote management server via the mobile phone for synchronous update of the data.

A method is provided for implementing a smart card remote operation based on a smart card web server, characterized in that it comprises the steps of:
A0. When a mobile phone is activated, initializing the smart card and choosing an application to activate SCWS in the smart card;
A. A remote management server transmits a short message of the SIM type to the mobile phone for prompting the mobile phone to update the content of the smart card;
B. The mobile phone transmits the short message to the smart card, the smart card web server (SCWS) in the smart card instructs the mobile phone to establish a session channel for communications with the smart card and to establish a data channel for communications with the remote management server, construct a mobile phone gateway in the client mode, and connect the mobile phone gateway to the remote management server;
C. According to the instruction by the smart card, the mobile phone gateway requests data from the remote management server, and forwards the response data from the remote management server to the smart card for data update of the smart card.

In an embodiment, Step B further comprises:
B1. The smart card analyzes the short message transmitted by the mobile phone, which is processed by SCWS or its proxy program;
B2. SCWS or its proxy program chooses a SIM card channel and instructs the mobile phone to get ready for connection to the remote management server.

In an embodiment, Step B further comprises:
B3. The mobile phone examines the execution environment, establishes a session channel with the smart card according to the Bearer Independent Protocol, establishes a HTTP or HTTPS channel that connects with the remote management server, and then constructs a mobile phone gateway of the client mode.

In an embodiment, the smart card establishes a plurality of data channels with the remote management server via the mobile phone for synchronous update of the data.

In an embodiment, the session channel uses different session identifiers (SIDs) for identification, all connection access data are forwarded into the SID as indicated by a UICC, and the SID physically identifies a SIM card channel.

In an embodiment, when the remote management server completes management, it closes the HTTP or HTTPS channel with the mobile phone gateway, and the mobile phone gateway also notifies the UICC to close the session channel with the mobile phone and end data update.

In an embodiment, the mobile phone performs integrality and confidentiality verification on the data in the application layer, and determines the forwarding of the data according to the user-defined strategy.

A system is suggested for implementing a smart card remote operation based on a smart card web server, characterized in that the system comprises:
- A SCWS activation module for, when a mobile phone is activated, initializing the smart card and choosing an application to activate SCWS in the smart card;
- An update notification module for transmitting a short message of the SIM type via the remote management server to a mobile phone and prompting the mobile phone to update the content of the smart card;
- A gateway establishing module for instructing the mobile phone via the smart card web server (SCWS) in the smart card to establish a session channel for communications with the smart card and a data channel for connection with the remote management server, construct a mobile phone gateway in the client mode, and connect to the remote management server;
- A data update module for requesting data from the remote management server via the mobile phone gateway according to the instruction by the smart card, and forwarding the response data from the remote management server to the smart card for data update of the smart card.

In an embodiment, the gateway establishing module further comprises:
- A short message processing module for controlling the smart card to analyze the short message transmitted by the mobile phone, which is processed by SCWS or its proxy program;
- A connection instructing module for choosing a SIM card channel via SCWS or its proxy program and instructing the mobile phone to get ready for connection to the remote management server;
- A channel establishing module for examining the execution environment via the mobile phone, establishing a session channel with the smart card according to the Bearer Independent Protocol, and establishing a HTTP or HTTPS channel that connects with the remote management server.

In an embodiment, the channel establishing module is further used for the smart card to establish a plurality of data channels with the remote management server via the mobile phone for synchronous update of the data.

With the method and system for implementing a smart card remote operation based on a smart card web server provided by the present invention, as a mobile phone is prompted to activate update by a short message transmitted thereto, the problem of addressing the mobile phone is effectively solved. A remote network is accessed by using a TCP/IP protocol stack to conveniently and reliably update bulk data. The mobile phone is used as a gateway to connect a smart card and a remote management server, thereby realizing security identity authentication, data integrality verification, implementation of data encryption and customizable access policies, and increasing the demand of an operator for enhancing value-added services of the smart card.

The aforementioned characteristics, features and advantages of the invention as well as the way they are achieved will be further illustrated in connection with the following examples and considerations as discussed in view of the figures.
- Fig.1: is a flow chart of the method for implementing a smart card remote operation based on a smart card web server provided by the present invention.
- Fig.2: illustrates the structure of the system for implementing a smart card remote operation based on a smart card web server provided by the present invention.
- Fig.3: illustrates the structure of a preferred embodiment of the system for implementing a smart card remote operation based on a smart card web server provided by the present invention.
- Fig.4: illustrates the structure of the gateway establishing module in the system for implementing a smart card remote operation based on a smart card web server provided by the present invention.

To make the object, technical solution and advantages of the present invention clearer and more specific, the present invention will be further described in detail below with reference to the accompanying drawings and through embodiments. It should be understood that specific embodiments described herein are only used to describe the present invention, which are not used to limit the present invention.

The main concept of the present invention is to employ the SCWS (Smart Card Web Server) technology of the SIM card, expand the SCWS client mode, install a gateway function module at a mobile phone end, the gateway communicates with UICC according to BIP (Bearer Independent Protocol), establishes or closes communication channels, receives or transmits data, and synchronizes the channel state according to instructions from UICC; at the same time, the gateway uses the TCP/IP data stack to establish a channel that connects with a remote management server with the client mode, requests data from the remote management server through the HTTP/HTTPS protocol according to instructions from UICC, and forwards the data from the remote monitoring server to UICC after certain level of data inspection and controlled encapsulation such that UICC updates the SIM card data in UICC according to the response from the remote management server.

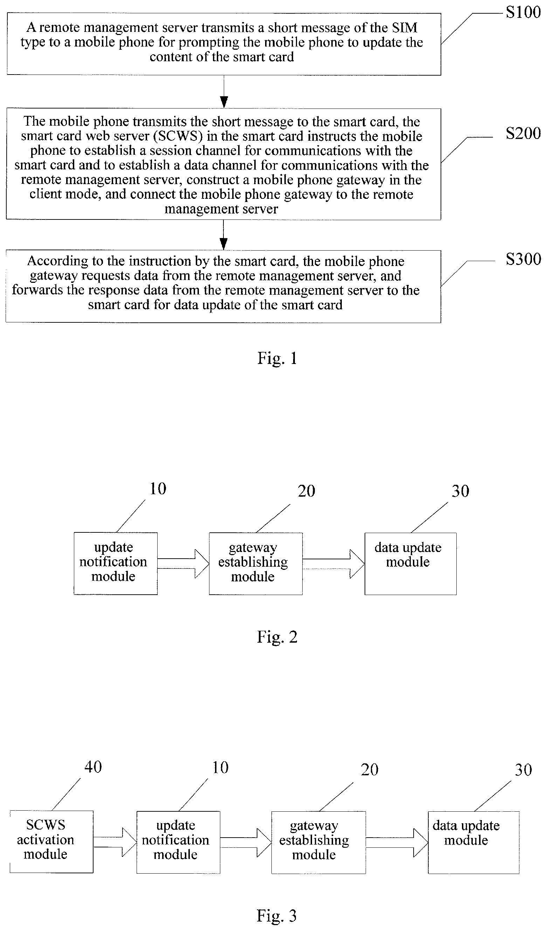

Refer to Fig.1. Fig.1 is a flow chart of the method for implementing a smart card remote operation based on a smart card web server provided by the present invention, comprising the following steps:
Step S100. A remote management server transmits a short message of the SIM type to a mobile phone for prompting the mobile phone to update the content of the smart card;
Step S200. The mobile phone transmits the short message to the smart card, the smart card web server (SCWS) in the smart card instructs the mobile phone to establish a session channel for communications with the smart card and to establish a data channel for communications with the remote management server, construct a mobile phone gateway in the client mode, and connect the mobile phone gateway to the remote management server;
Step S300. According to the instruction by the smart card, the mobile phone gateway requests data from the remote management server, and forwards the response data from the remote management server to the smart card for data update of the smart card.

The above steps will be described in detail below with reference to a specific UICC card.

UICC (Universal Integrated Circuit Cards) is one of the smart cards, i.e. the mobile phone card that we are familiar with. UICC has built-in application USIM (SIM/UIM), USIM corresponds to the 3G network, SIM corresponds to the 2G network, and UIM corresponds to the CDMA network, which are collectively referred to as SIM in the present invention.

In the process of power-on and activation, a mobile phone will initialize UICC according to the ISO/IEC7816 standard, and add a sub-process to activate SCWS. There are two activation ways, one of which is that the mobile phone actively chooses the SCWS application in UICC, and the other is that the user chooses activation via the mobile phone, the SCWS application is stored in the first layer file of the UICC root files, and activation is chosen through the AID (Application Identifier) entry.

To implement data interaction between the smart card and a remote management server and to complete the data update of the smart card, the remote management server first needs to transmit a short message of the SIM type to the mobile phone, the short message is a SCWS-related short message, which contains the information of connecting with the remote management server for UICC content update, the mobile phone receives the short message and encapsulates the same, and forwards the short message to UICC, UICC analyzes the short message and finds that the short message is a SCWS-related short message, which is then delivered to SCWS or its proxy program for processing.

The encapsulation of the short message by the mobile phone is mainly to encapsulate the content of the short message into an ENVELOPE type APDU (Application Protocol Data Unit), and then transmit to UICC via a specific port, for example, via a port defined by the Smart Card Association of the European Telecommunications Standards Institute. The present invention employs the OTA short message technology, which can effectively avoid the problem of mobile phone addressing. There is always an available channel to transmit a short message to the mobile phone either in the idle state or in case of audio data services.

ENVELOPE APDU will be briefly described below. APDU for the interaction between UICC and the mobile phone has 5 basic units and a dataset with variable length, CLA refers to a command set, and ENVELOPE belongs to the UICC command set herein with a value of 80. INS refers to command code, and the value of ENVELOPE command code is C2. P1 and P2 are command parameters, Lc is the data length, and it is a SIM card short message herein, immediately followed by the content of the short message. After receiving APDU, UICC processes the command CLA INS and responds with the processing result. If the response states SW1 and SW2 have the value of 90 00, it indicates that the command has been received and correctly processed.

Furthermore, SCWS or its proxy program will choose a SIM card channel, which can be a basic channel or an expanded channel, and instruct the mobile phone on SID of the SIM card channel that there is a proactive command to be processed, the mobile phone acquires the proactive command via the Fetch APDU command of the SIM card, the command instructs the smart card to get ready for connection to the remote management server, the mobile phone examines the execution environment, establishes a session channel with UICC according to BIP (Bearer Independent Protocol) in the load mode, and the used load mode may be GPRS, UMTS or WIFI. Each session channel uses a different session identifier (SID) for identification, all connection access data are forwarded into the SID as indicated by a UICC, and the SID physically identifies a SIM card channel.

At the same time, the mobile phone employs the HTP/IP protocol to establish a HTTP or HTTPS channel with the remote management server, and then constructs a mobile phone gateway that connects UICC and the remote management server such that UICC is connected to the remote management server in the client mode via the mobile phone gateway for data update. The mobile phone gateway communicates with UICC by means of BIP, communicates with the remote management server by means of TCP/IP, and plays a role of agent for data forwarding between them to realize data gateways for different protocol stacks.

When performing data update, UICC transmits the data requested from the remote management server to the mobile phone gateway via the session channel established with the mobile phone gateway, the mobile phone gateway transmits the data requested by UICC to the remote management server via the HTTP or HTTPS channel established with the remote management server, the remote management server responds to the data requested by UICC, and forwards the response data to UICC via the mobile phone gateway to realize the data update of UICC. The updated data of UICC may be value-added services of an operator or customized contents of the mobile phone, thereby realizing the remote data management and update of UICC.

When the remote management server completes management, it closes the HTTP or HTTPS channel with the mobile phone gateway, and the mobile phone gateway also notifies UICC to close the session channel with the mobile phone and end data update.

According to the present invention, UICC may establish a plurality of communication channels with the remote management server via the mobile phone gateway constructed on the mobile phone, which is of course dependent on the support by the SIM card and the capability of the TCP/IP protocol stack on the mobile phone. Moreover, there may be more than one remote management server, and the mobile phone may use secure or insecure connection. The mobile phone may perform integrality and confidentiality verification on the data in the application layer, and determines the forwarding of the data according to the user-defined strategy.

During data update, furthermore, UICC may choose the HTTP/HTTPS channel to connect with the remote management server via the mobile phone gateway, and can safely update bulk data and information, including the storage of user manuals, operator yellow books, advertisement, etc. On the other hand, requests by UICC are usually submitted to the remote management server in the format of the command HTTP POST, wherein the construction of the HTTP/HTTPS header needs to be authenticated and negotiated with the remote management server in advance with respect to the format so as to avoid the monitor and forgery by a third party. Of course, authentication with a digital certificate can also be used as an additional step for the SIM card authentication, as the SIM card authentication would sometimes become invalid, e.g. during WIFI connection.

Preferably, when a USB-UICC interface is implemented on the mobile phone, SCWS may directly use the TCP/IP data stack for connection to the remote management server, thereby avoiding BIP and making the update of UICC data more effective.

Based on the above method for implementing a smart card remote operation based on a smart card web server, the present invention further provides a system for implementing a smart card remote operation based on a smart card web server, as shown in Fig.2, and the system comprises:
An update notification module 10 for transmitting a short message of the SIM type via the remote management server to a mobile phone and prompting the mobile phone to update the content of the smart card;
A gateway establishing module 20 for instructing the mobile phone via the smart card web server (SCWS) in the smart card to establish a session channel for communications with the smart card and a data channel for connection with the remote management server, construct a mobile phone gateway in the client mode, and connect to the remote management server;
A data update module 30 for requesting data from the remote management server via the mobile phone gateway according to the instruction by the smart card, and forwarding the response data from the remote management server to the smart card for data update of the smart card.

As shown in Fig.3, furthermore, the system further comprises a SCWS activation module 40 for, when a mobile phone is activated, initializing the smart card and choosing an application to activate SCWS in the smart card.

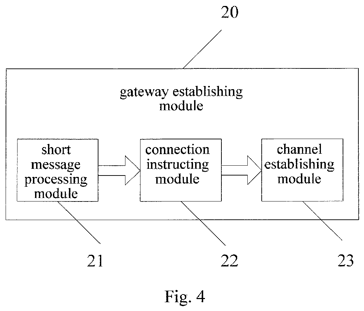

Preferably, as shown in Fig.4, the gateway establishing module 20 further comprises:
A short message processing module 21 for controlling the smart card to analyze the short message transmitted by the mobile phone, which is processed by SCWS or its proxy program;
A connection instructing module 22 for choosing a SIM card channel via SCWS or its proxy program and instructing the mobile phone to get ready for connection to the remote management server;
A channel establishing module 23 for examining the execution environment via the mobile phone, establishing a session channel with the smart card according to the Bearer Independent Protocol, and establishing a HTTP or HTTPS channel that connects with the remote management server; and for the smart card to establish a plurality of data channels with the remote management server via the mobile phone for synchronous update of the data.

With the method and system for implementing a smart card remote operation based on a smart card web server provided by the present invention, as a mobile phone is prompted to activate update by a short message transmitted thereto, the problem of addressing the mobile phone is effectively solved. A remote network is accessed by using a TCP/IP protocol stack to conveniently and reliably update bulk data. The mobile phone is used as a gateway to connect a smart card and a remote management server, thereby realizing security identity authentication, data integrality verification, implementation of data encryption and customizable access policies, and increasing the demand of an operator for enhancing value-added services of the smart card.

It should be understood that applications of the present invention are not limited to the above examples. To those skilled in the art, improvements or modifications may be made based on the description above, and all of these improvements or modifications shall be encompassed by the appended claims of the present invention.

## Claims

1. A method (S100, S200, S300) for implementing a smart card remote operation based on a smart card web server, comprising the steps of:
A. A remote management server transmits a short message of the Subscriber Identity Module, SIM type to a mobile phone for prompting the mobile phone to update the content of the smart card (S100), wherein the short message contains the information of connecting with the remote management server for smart card content update; the mobile phone receives the short message;
B. The mobile phone transmits the short message to the smart card that receives and analyses the short message and then delivers the short message to the smart card web server, SCWS, in the smart card, wherein the short message causes the smart card web server to instruct the mobile phone to establish a session channel for communications with the smart card and to establish a data channel for communications with the remote management server, construct a mobile phone gateway in the client mode, and connect the mobile phone gateway to the remote management server (S200);
wherein the smart card establishes a plurality of data channels with the remote management server via the mobile phone for synchronous update of the data;
wherein the session channel uses different session identifiers, SIDs, for identification, all connection access data are forwarded into the SID as indicated by the smart card, and the SID physically identifies a SIM card channel;
C. According to the instruction by the smart card, the mobile phone gateway requests data via the data channel from the remote management server, and forwards, via the session channels, the response data received from the remote management server over the plurality of the data channels to the smart card for update of bulk data on the smart card (S300), wherein Step B (S200) further comprises:
The mobile phone examines the execution environment, establishes the session channel with the smart card according to the Bearer Independent Protocol, establishes a HTTP or HTTPS channel that connects with the remote management server, and then constructs the mobile phone gateway of the client mode, and
wherein the mobile phone gateway
uses a TCP/IP data stack to establish a channel that connects with the remote management server in the client mode, requests data from the remote management server through a HTTP/HTTPS protocol according to instructions from the smart card, and forwards the data from the remote management server to the smart card after data inspection and controlled encapsulation such that the smart card updates the SIM card data in the smart according to the response from the remote management server.

2. The method (S100, S200, S300) according to claim 1, wherein Step B (S200) further comprises:
B1. The smart card analyzes the short message transmitted by the mobile phone, which is processed by SCWS or its proxy program;
B2. SCWS or its proxy program chooses a SIM card channel and instructs the mobile phone to get ready for connection to the remote management server.

3. The method (S100, S200, S300) according to any of the preceding claims, wherein the smart card chooses HTTP/HTTPS for connection with the remote management server via the mobile phone gateway, and the format of the HTTP/HTTPS header is determined through prior negotiation with the remote management server.

4. A system (10, 20, 30) for implementing a smart card remote operation based on a smart card web server, **characterized in that** the system comprises:
- An update notification module (10) for transmitting a short message of the Subscriber Identity Module, SIM, type from a remote management server to a mobile phone and prompting the mobile phone to update the content of the smart card; wherein the short message contains the information of connecting with the remote management server for smart card content update;
- A gateway establishing module (20) for receiving the short message at the mobile phone, for transmitting the short message to the smart card that receives and analyses the short message and then delivers the short message to the smart card web server, SCWS and wherein the short message causes the smart card web server to instruct the mobile phone to establish a session channel for communications with the smart card and a data channel for connection with the remote management server, construct a mobile phone gateway in the client mode, and connect to the remote management server;
- A data update module (30) for requesting data from the remote management server via the data channel with the mobile phone gateway according to the instruction by the smart card, and forwarding, via the session channel, the response data received from the remote management server over the plurality of data channels to the smart card for update of bulk data on the smart card,
wherein the gateway establishing module (20) further comprises:
- A short message processing module (21) for controlling the smart card to analyze the short message transmitted by the mobile phone, which is processed by SCWS or its proxy program;
- A connection instructing module (22) for choosing a SIM card channel via SCWS or its proxy program and instructing the mobile phone to get ready for connection to the remote management server;
- A channel establishing module (23) for examining the execution environment via the mobile phone, establishing a session channel with the smart card according to the Bearer Independent Protocol, and establishing a HTTP or HTTPS channel that connects with the remote management server,
wherein the channel establishing module (23) is further used for the smart card
to establish a plurality of data channels with the remote management server via the mobile phone for synchronous update of the data;
wherein the session channel uses different session identifiers, SIDs, for identification, all connection access data are forwarded into the SID as indicated by the smart card, and the SID physically identifies a SIM card channel;
wherein the mobile phone is adapted to examine the execution environment, to establish the session channel with the smart card according to the Bearer Independent Protocol, to establish a HTTP or HTTPS channel that connects with the remote management server, and then to construct the mobile phone gateway of the client mode, and
wherein the mobile phone gateway is adapted to use a TCP/IP data stack to establish a channel that connects with the remote management server in the client mode, to request data from the remote management server through a HTTP/HTTPS protocol according to instructions from the smart card, and to forward the data from the remote management server to the smart card after data inspection and controlled encapsulation such that the smart card updates the SIM card data in the smart according to the response from the remote management server.

5. The method (S100, S200, S300) according to any of claims 1 to 3, which comprises prior to step A (S100) the following step:
A0. When the mobile phone is activated, initializing the smart card and choosing an application to activate SCWS in the smart card.

6. The method (S100, S200, S300) according to claim 5, wherein when the remote management server completes management, it closes the HTTP or HTTPS channel with the mobile phone gateway, and the mobile phone gateway also notifies the UICC to close the session channel with the mobile phone and end data update.

7. The method (S100, S200, S300) according to any of the claims 5 or 6, wherein the mobile phone performs integrality and confidentiality verification on the data in the application layer, and determines the forwarding of the data according to the user-defined strategy.

8. The system (10, 20, 30) according to claim 4, further comprising:
- A SCWS activation module (40) for, when the mobile phone is activated, initializing the smart card and choosing an application to activate SCWS in the smart card.

## Patentansprüche

1. Verfahren (S100, S200, S300) zum Umsetzen einer Chipkarten-Fernoperation basierend auf einem Chipkarten-Webserver, das die folgenden Schritte umfasst:
A. Ein Fernverwaltungsserver sendet eine Kurznachricht vom SIM-Typ (Subscriber Identity Module) an ein Mobiltelefon, um das Mobiltelefon aufzufordern, den Inhalt der Chipkarte (S100) zu aktualisieren, wobei die Kurznachricht die Informationen bezüglich des Verbindens mit dem Fernverwaltungsserver zum Aktualisieren des Inhalts der Chipkarte enthält; das Mobiltelefon empfängt die Kurznachricht;
B. Das Mobiltelefon sendet die Kurznachricht an die Chipkarte, die die Kurznachricht empfängt und analysiert und dann die Kurznachricht an den Chipkarten-Webserver (SCWS, Smart Card Web Server) in der Chipkarte zustellt, wobei die Kurznachricht den Chipkarten-Webserver veranlasst, das Mobiltelefon anzuweisen, einen Sitzungskanal zur Kommunikation mit der Chipkarte zu eröffnen und einen Datenkanal zur Kommunikation mit dem Fernverwaltungsserver zu eröffnen, ein Mobiltelefon-Gateway im Client-Modus aufzubauen und das Mobiltelefon-Gateway mit dem Fernverwaltungsserver (S200) zu verbinden;
wobei die Chipkarte mehrere Datenkanäle mit dem Fernverwaltungsserver über das Mobiltelefon zum synchronen Aktualisieren der Daten eröffnet;
wobei der Sitzungskanal unterschiedliche Sitzungskennungen (SID, Session Identifiers) zur Identifizierung verwendet, alle Verbindungszugriffsdaten in die SID weitergeleitet werden, wie durch die Chipkarte angezeigt, und die SID physisch einen SIM-Kartenkanal identifiziert;
C. Gemäß der Anweisung durch die Chipkarte fordert das Mobiltelefon-Gateway über den Datenkanal Daten von dem Fernverwaltungsserver an und leitet, über die Sitzungskanäle, die vom Fernverwaltungsserver empfangenen Antwortdaten über die mehreren Datenkanäle zum Aktualisieren von Mengendaten auf der Chipkarte (S300) an die Chipkarte weiter,
wobei Schritt B (S200) ferner Folgendes umfasst:
Das Mobiltelefon untersucht die Ausführungsumgebung, eröffnet den Sitzungskanal mit der Chipkarte entsprechend dem Bearer-Independent-Protokoll, eröffnet einen HTTP- oder HTTPS-Kanal, der sich mit dem Fernverwaltungsserver verbindet, und baut dann das Mobiltelefon-Gateway des Client-Modus auf, und
wobei das Mobiltelefon-Gateway einen TCP/IP-Datenstapel verwendet, um einen Kanal zu eröffnen, der sich mit dem Fernverwaltungsserver im Client-Modus verbindet, Daten vom Fernverwaltungsserver über ein HTTP/HTTPS-Protokoll entsprechend Anweisungen von der Chipkarte anfordert und nach Dateninspektion und gesteuerter Kapselung die Daten vom Fernverwaltungsserver an die Chipkarte weiterleitet, sodass die Chipkarte die SIM-Kartendaten in der Chipkarte entsprechend der Antwort vom Fernverwaltungsserver aktualisiert.

2. Verfahren (S100, S200, S300) nach Anspruch 1, wobei Schritt B (S200) ferner Folgendes umfasst:
B1. Die Chipkarte analysiert die vom Mobiltelefon gesendete Kurznachricht, die vom SCWS oder seinem Proxy-Programm verarbeitet wird;
B2. SCWS oder sein Proxy-Programm wählt einen SIM-Kartenkanal und weist das Mobiltelefon an, sich für eine Verbindung mit dem Fernverwaltungsserver bereit zu machen.

3. Verfahren (S100, S200, S300) nach einem der vorhergehenden Ansprüche, wobei die Chipkarte HTTP/HTTPS zur Verbindung mit dem Fernverwaltungsserver über das Mobiltelefon-Gateway auswählt und das Format des HTTP/HTTPS-Kopfteils durch vorherige Aushandlung mit dem Fernverwaltungsserver bestimmt wird.

4. System (10, 20, 30) zum Umsetzen einer Chipkarten-Fernoperation basierend auf einem Chipkarten-Webserver, **dadurch gekennzeichnet, dass** das System Folgendes umfasst:
- ein Aktualisierungsbenachrichtigungsmodul (10) zum Senden einer Kurznachricht vom SIM-Typ (Subscriber Identity Module) von einem Fernverwaltungsserver an ein Mobiltelefon und Auffordern des Mobiltelefons, den Inhalt der Chipkarte zu aktualisieren, wobei die Kurznachricht die Informationen bezüglich des Verbindens mit dem Fernverwaltungsserver zum Aktualisieren des Inhalts der Chipkarte enthält;
- ein Gateway-Errichtungsmodul (20) zum Empfangen der Kurznachricht am Mobiltelefon, zum Senden der Kurznachricht an die Chipkarte, die die Kurznachricht empfängt und analysiert und dann die Kurznachricht an den Chipkarten-Webserver (SCWS, Smart Card Web Server) zustellt, und wobei die Kurznachricht den Chipkarten-Webserver veranlasst, das Mobiltelefon anzuweisen, einen Sitzungskanal zur Kommunikation mit der Chipkarte und einen Datenkanal zur Verbindung mit dem Fernverwaltungsserver zu eröffnen, ein Mobiltelefon-Gateway im Client-Modus aufzubauen und eine Verbindung mit dem Fernverwaltungsserver herzustellen;
- ein Datenaktualisierungsmodul (30) zum Anfordern von Daten von dem Fernverwaltungsserver über den Datenkanal mit dem Mobiltelefon-Gateway gemäß der Anweisung durch die Chipkarte, und Weiterleiten, über den Sitzungskanal, der von dem Fernverwaltungsserver empfangenen Antwortdaten über die mehreren Datenkanäle an die Chipkarte zum Aktualisieren von Mengendaten auf der Chipkarte,
wobei das Gateway-Errichtungsmodul (20) ferner Folgendes umfasst:
- ein Kurznachrichtenverarbeitungsmodul (21) zum Steuern der Chipkarte zum Analysieren der vom Mobiltelefon gesendeten Kurznachricht, die vom SCWS oder seinem Proxy-Programm verarbeitet wird;
- ein Verbindungsanweisungsmodul (22) zum Auswählen einer SIM-Karte über SCWS oder sein Proxy-Programm und Anweisen des Mobiltelefons, sich für eine Verbindung mit dem Fernverwaltungsserver bereit zu machen;
- ein Kanaleröffnungsmodul (23) zum Untersuchen der Ausführungsumgebung über das Mobiltelefon, Eröffnen eines Sitzungskanals mit der Chipkarte gemäß dem Bearer-Independent-Protokoll und Eröffnen eines HTTP- oder HTTPS-Kanals, der sich mit dem Fernverwaltungsserver verbindet,
wobei das Kanaleröffnungsmodul (23) ferner für die Chipkarte verwendet wird, um über das Mobiltelefon mehrere Datenkanäle mit dem Fernverwaltungsserver zum synchronen Aktualisieren der Daten zu eröffnen;
wobei der Sitzungskanal unterschiedliche Sitzungskennungen (SID, Session Identifiers) zur Identifizierung verwendet, alle Verbindungszugriffsdaten in die SID weitergeleitet werden, wie durch die Chipkarte angezeigt, und die SID physisch einen SIM-Kartenkanal identifiziert; wobei das Mobiltelefon dazu angepasst ist, die Ausführungsumgebung zu untersuchen, den Sitzungskanal mit der Chipkarte entsprechend dem Bearer-Independent-Protokoll zu eröffnen, einen HTTP- oder HTTPS-Kanal zu eröffnen, der sich mit dem Fernverwaltungsserver verbindet, und dann das Mobiltelefon-Gateway des Client-Modus aufzubauen, und
wobei das Mobiltelefon-Gateway dazu angepasst ist, einen TCP/IP-Datenstapel zu verwenden, um einen Kanal zu eröffnen, der sich mit dem Fernverwaltungsserver im Client-Modus verbindet, Daten vom Fernverwaltungsserver über ein HTTP/HTTPS-Protokoll entsprechend Anweisungen von der Chipkarte anzufordern und nach Dateninspektion und gesteuerter Kapselung die Daten vom Fernverwaltungsserver an die Chipkarte weiterzuleiten, sodass die Chipkarte die SIM-Kartendaten in der Chipkarte entsprechend der Antwort vom Fernverwaltungsserver aktualisiert.

5. Verfahren (S100, S200, S300) nach einem der Ansprüche 1 bis 3, das vor Schritt A (S100) den folgenden Schritt umfasst:
A0. Wenn das Mobiltelefon aktiviert wird, Initialisieren der Chipkarte und Auswählen einer Anwendung zum Aktivieren von SCWS in der Chipkarte.

6. Verfahren (S100, S200, S300) nach Anspruch 5, wobei der Fernverwaltungsserver, wenn er die Verwaltung abschließt, den HTTP- oder HTTPS-Kanal mit dem Mobiltelefon-Gateway schließt, und das Mobiltelefon-Gateway auch den UICC benachrichtigt, um den Sitzungskanal mit dem Mobiltelefon zu schließen und die Datenaktualisierung zu beenden.

7. Verfahren (S100, S200, S300) nach einem der Ansprüche 5 oder 6, wobei das Mobiltelefon Integralitäts- und Vertraulichkeitsverifizierung auf der Anwendungsschicht durchführt und das Weiterleiten der Daten gemäß der benutzerdefinierten Strategie bestimmt.

8. System (10, 20, 30) nach Anspruch 4, das ferner Folgendes umfasst:
- ein SCWS-Aktivierungsmodul (40) zum, wenn das Mobiltelefon aktiviert wird, Initialisieren der Chipkarte und Auswählen einer Anwendung zum Aktivieren von SCWS in der Chipkarte.

## Revendications

1. Procédé (S100, S200, S300) pour mettre en oeuvre une opération distante de carte à puce basée sur un serveur Web de carte à puce, le procédé comprenant les étapes suivantes :
A. un serveur de gestion à distance transmet un message court du type module d'identité d'abonné (SIM) à un téléphone mobile pour inviter le téléphone mobile à mettre à jour le contenu de la carte à puce (S100), le message court contenant l'information de connexion au serveur de gestion à distance pour la mise à jour de contenu de carte à puce ; et le téléphone mobile reçoit le message court ;
B. le téléphone mobile transmet le message court à la carte à puce qui reçoit et analyse le message court, puis fournit le message court au serveur Web de carte à puce (SCWS), dans la carte à puce, le message court amenant le serveur Web de carte à puce à donner l'instruction au téléphone mobile d'établir un canal de session pour une communication avec la carte à puce, et d'établir un canal de données pour une communication avec le serveur de gestion à distance, à générer une passerelle de téléphone mobile dans le mode client, et à connecter la passerelle de téléphone mobile au serveur de gestion à distance (S200) ;
la carte à puce établissant une pluralité de canaux de données avec le serveur de gestion à distance par l'intermédiaire du téléphone mobile pour une mise à jour synchrone des données ;
le canal de session utilisant différents identifiants de session (SID) pour l'identification, toutes les données d'accès de connexion sont transférées dans le SID comme indiqué par la carte à puce, et le SID identifie physiquement un canal de carte SIM ;
C. selon l'instruction de la carte à puce, la passerelle de téléphone mobile demande des données par l'intermédiaire du canal de données en provenance du serveur de gestion à distance, et transfère à la carte à puce, par l'intermédiaire des canaux de session, les données de réponse reçues en provenance du serveur de gestion à distance sur la pluralité des canaux de données, pour une mise à jour des données en masse sur la carte à puce (S300),
l'étape B (S200) comprenant en outre l'étape suivante :
le téléphone mobile examine l'environnement d'exécution, établit le canal de session avec la carte à puce selon le protocole indépendant de la porteuse, établit un canal HTTP ou HTTPS qui connecte au serveur de gestion à distance, puis génère la passerelle de téléphone mobile du mode client, et
la passerelle de téléphone mobile utilisant une pile de données TCP/IP pour établir un canal qui connecte au serveur de gestion à distance dans le mode client, demandant des données en provenance du serveur de gestion à distance par l'intermédiaire d'un protocole HTTP/HTTPS selon des instructions en provenance de la carte à puce, et transférant les données du serveur de gestion à distance à la carte à puce après une inspection de données et une encapsulation contrôlée, de sorte que la carte à puce mette à jour les données de carte SIM dans la carte à puce selon la réponse en provenance du serveur de gestion à distance.

2. Procédé (S100, S200, S300) selon la revendication 1, dans lequel l'étape B (S200) comprend en outre les étapes suivantes :
B1. la carte à puce analyse le message court transmis par le téléphone mobile, qui est traité par le SCWS ou son programme mandataire ;
B2. le SCWS ou son programme mandataire choisit un canal de carte SIM et donne l'instruction au téléphone mobile d'être prêt à se connecter au serveur de gestion à distance.

3. Procédé (S100, S200, S300) selon l'une quelconque des revendications précédentes, dans lequel la carte à puce choisit HTTP/HTTPS pour se connecter au serveur de gestion à distance par l'intermédiaire de la passerelle de téléphone mobile, et le format de l'en-tête HTTP/HTTPS est déterminé au moyen d'une négociation préalable avec le serveur de gestion à distance.

4. Système (10, 20, 30) pour mettre en oeuvre une opération distante de carte à puce basée sur un serveur Web de carte à puce, le système étant **caractérisé en ce qu'**il comprend :
un module de notification de mise à jour (10) pour transmettre un message court du type module d'identité d'abonné (SIM) d'un serveur de gestion à distance à un téléphone mobile, et inviter le téléphone mobile à mettre à jour le contenu de la carte à puce ; le message court contenant l'information de connexion au serveur de gestion à distance pour la mise à jour de contenu de carte à puce ;
un module d'établissement de passerelle (20) pour recevoir le message court au niveau du téléphone mobile, pour transmettre le message court à la carte à puce qui reçoit et analyse le message court, puis fournit le message court au serveur Web de carte à puce (SCWS), le message court amenant le serveur Web de carte à puce à donner l'instruction au téléphone mobile d'établir un canal de session pour une communication avec la carte à puce et un canal de données pour une connexion au serveur de gestion à distance, à générer une passerelle de téléphone mobile dans le mode client, et à se connecter au serveur de gestion à distance ;
un module de mise à jour de données (30) pour demander des données en provenance du serveur de gestion à distance, par l'intermédiaire du canal de données, avec la passerelle de téléphone mobile selon l'instruction de la carte à puce, et transférer à la carte à puce, par l'intermédiaire du canal de session, les données de réponse reçues en provenance du serveur de gestion à distance sur la pluralité de canaux de données, pour une mise à jour de données en masse sur la carte à puce,
le module d'établissement de passerelle (20) comprenant en outre :
un module de traitement de message court (21) pour contrôler la carte à puce pour qu'elle analyse le message court transmis par le téléphone mobile, qui est traité par le SCWS ou son programme mandataire ;
un module d'instruction de connexion (22) pour choisir un canal de carte SIM par l'intermédiaire du SCWS ou de son programme mandataire et donner l'instruction au téléphone mobile d'être prêt à se connecter au serveur de gestion à distance ;
un module d'établissement de canal (23) pour examiner l'environnement d'exécution par l'intermédiaire du téléphone mobile, établir un canal de session avec la carte à puce selon le protocole indépendant de la porteuse, et établir un canal HTTP ou HTTPS qui connecte au serveur de gestion à distance,
le module d'établissement de canal (23) étant en outre utilisé par la carte à puce pour établir une pluralité de canaux de données avec le serveur de gestion à distance par l'intermédiaire du téléphone mobile pour une mise à jour synchrone des données ;
le canal de session utilisant différents identifiants de session (SID) pour l'identification, toutes les données d'accès de connexion sont transférées dans le SID comme indiqué par la carte à puce, et le SID identifie physiquement un canal de carte SIM ;
le téléphone mobile étant conçu pour examiner l'environnement d'exécution, établir le canal de session avec la carte à puce selon le protocole indépendant de la porteuse, pour établir un canal HTTP ou HTTPS qui connecte au serveur de gestion à distance, puis pour générer la passerelle de téléphone mobile du mode client ; et
la passerelle de téléphone mobile étant conçue pour utiliser une pile de données TCP/IP pour établir un canal qui connecte au serveur de gestion à distance dans le mode client, pour demander des données en provenance du serveur de gestion à distance par l'intermédiaire d'un protocole HTTP/HTTPS selon des instructions en provenance de la carte à puce, et pour transférer les données du serveur de gestion à distance à la carte à puce après une inspection de données et une encapsulation contrôlée, de sorte que la carte à puce mette à jour les données de carte SIM dans la carte à puce selon la réponse en provenance du serveur de gestion à distance.

5. Procédé (S100, S200, S300) selon l'une quelconque des revendications 1 à 3, comprenant, avant l'étape A (S100), l'étape suivante :
A0. quand le téléphone mobile est activé, initialiser la carte à puce et choisir une application pour activer le SCWS dans la carte à puce.

6. Procédé (S100, S200, S300) selon la revendication 5, le procédé, quand le serveur de gestion à distance achève la gestion, fermant le canal HTTP ou HTTPS avec la passerelle de téléphone mobile, et la passerelle de téléphone mobile notifie également l'UICC pour qu'il ferme le canal de session avec le téléphone mobile et termine la mise à jour de données.

7. Procédé (S100, S200, S300) selon l'une quelconque des revendications 5 et 6, dans lequel le téléphone mobile réalise une vérification d'intégralité et de confidentialité sur les données dans la couche application, et détermine le transfert des données selon la stratégie définie par l'utilisateur.

8. Système (10, 20, 30) selon la revendication 4, comprenant en outre :
un module d'activation de SCWS (40) pour, quand le téléphone mobile est activé, initialiser la carte à puce et choisir une application pour activer le SCWS dans la carte à puce.
